**Europäisches Patentamt**

**European Patent Office**

**Office européen des brevets**

(19)

(11) Veröffentlichungsnummer: **0 158 827**
**B1**

(12) ## EUROPÄISCHE PATENTSCHRIFT

(45) Veröffentlichungstag der Patentschrift:
**04.10.89**

(51) Int. Cl.⁴: **D 21 B 1/32**, D 21 B 1/34

(21) Anmeldenummer: **85102843.1**

(22) Anmeldetag: **13.03.85**

(54) **Anordnung zur Aufbereitung von Altpapier.**

(30) Priorität: **17.04.84 DE 3414460**
**08.06.84 DE 3421330**

(43) Veröffentlichungstag der Anmeldung:
**23.10.85 Patentblatt 85/43**

(45) Bekanntmachung des Hinweises auf die Patenterteilung:
**04.10.89 Patentblatt 89/40**

(84) Benannte Vertragsstaaten:
**AT BE CH DE FR GB IT LI NL**

(56) Entgegenhaltungen:
**EP-A-0 120 766**
**EP-A-0 147 564**
**DE-A-3 320 125**
**DE-B-2 759 113**
**GB-A-2 061 343**
**US-A-3 474 972**
**US-A-4 136 018**

(73) Patentinhaber: **J.M. Voith GmbH, Postfach 1940 St. Pöltener Strasse 43, D-7920 Heidenheim (DE)**

(72) Erfinder: **Musselmann, Walter, Franz- Marc-Strasse 32, D-7920 Heidenheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft eine Einrichtung zur Aufbereitung von Altpapier.

Eine solche Einrichtung ist beschrieben in der EP-A-0 147 564. Mit dieser Anordnung wird die aus dem Sekundärstofflöser abgezogene Fraktion, die mit dem Schwerschmutz angereichert ist, in einen Hydrozyklon geleitet, wonach der daraus abgeführte Gutstoff wieder zurück in den Sekundärstofflöser geleitet wird, und zwar über dessen Leichtstoffabzugshülse.

Andererseits wird bei einer ähnlichen, aus der DE-C-2 759 113 bekannten Anordnung sowohl die mit dem Leichtstoff angereicherte, als auch die mit dem Schwerschmutz angereicherte, über den Hydrozyklon geführte und aus dem Sekundärstofflöser abgeführte Fraktion mehreren Reinigungsstufen unterworfen, wobei zwischendurch erzeugter Gutstoff einer Gutstoffsammelbütte zugeführt und schließlich ein mit erheblichen Schmutzanteilen durchsetzter Restanteil wieder in den Primärstofflöser zurückgeführt wird. Man erkennt aus der letztgenannten Anlage, daß diese bisher sehr aufwendig aufgebaut worden sind, um die nötigen Verarbeitungsschritte durchzuführen, bis man einigermaßen den Gutstoff von den Verschmutzungen befreit hatte und einen Restanteil an Fasersuspension erhielt, der relativ stark verschmutzt wieder in dem Stofflöser 1 aufbereitet wurde.

Eine ähnliche Anordnung, bei welcher ein Sekundärstofflöser einem Primärstofflöser nachgeschaltet ist, ist bekannt aus GB-A-2 061 343. Hierbei wird jedoch zur Abscheidung von Schwerschmutz ein Hydrozyklon zwischen dem Primär- und dem Sekundärstofflöser eingeschaltet. Ferner wird der hier aus dem Sekundärstofflöser abgezogene mit Verschmutzungen angereicherte Stoffanteil wieder zurück in den Sekundärstofflöser geleitet. Dies führt dazu, daß ein großer Anteil der Verschmutzungen praktisch im Kreislauf geführt wird, was wegen der Gefahr der Zerkleinerung und der damit Hand in Hand gehender, schwererer Sortierbarkeit desselben, recht ungünstig ist.

Aus US-PS-4 136 018 ist es andererseits auch bereits bekannt, die Zuführung des Stoffes in einen Sekundärstofflöser in der in einer Hülse gebildeten Ringkammer vorzusehen, die ein zentrales Leichtstoffabzugsrohr umgibt. Allerdings werden auch hier getrennte Stoffströme, die mit Verunreinigungen angereichert sind, von dem Sekundärstofflöser weggeführt, indem nämlich zusätzlich zu dem Leichtstoffabzugsrohr ein Abzugsrohr für mit Schwerschmutz angereicherte Stoffsuspension am Umfang des Gehäuses angeschlossen ist.

Die Aufgabe der Erfindung ist es gegenüber der eingangs genannten Anordnung, diese weiter zu vereinfachen und demgemäß billiger auszuführen.

Diese Aufgabe wird bei einer Einrichtung der eingangs genannten Art durch die kennzeichnenden Merkmale des Patentanspruchs 1 gelöst.

Nachfolgend wird die Erfindung anhand einiger Ausführungsbeispiele erläutert. Dabei zeigt

Fig. 1 die Stirnseite des Sekundärstofflösers mit den verschiedenen dort angeschlossenen Stutzen im Detail

Fig. 2 schematisch eine andere, ähnliche Ausbildung des Sekundärstofflösers im Querschnitt

Fig. 3 prinzipiell eine erfindungsgemäße Anlage und

Fig. 4 eine Ansicht des Waschfilters zu der Erfindung.

Der Sekundärstofflöser ist im wesentlichen kreiszylinderförmig ausgebildet, und weist an einer Seite ein senkrecht zur Achse 100 stehendes Sieb 11 auf, vor dem ein im wesentlichen aus einem von einer Welle getragenen Armstern bestehender Rotor 12 rotiert. Das Sieb trennt von dem übrigen Behälterraum einen Raum 10 ab, aus dem Gutstoff über einen Stutzen 14 abgezogen wird. Der Rotor erzeugt in dem Sekundärstofflöser eine Wirbelströmung, deren Achse mit der Rotationssymmetrieachse 100 des Sekundärstofflösers zusammenfällt. An der Umfangswandung des Sekundärstofflösers wird über eine Öffnung 5 eine Schwerschmutzfraktion abgezogen. Gegenüber dem Sieb befinden sich an der entfernteren Stirnseite die verschiedenen Stutzen. Dabei ist der eine Stutzen mit 6 bzw. 6' für die dem Sekundärstofflöser zugeführte Fasersuspension und ein Auslaßstutzen für mit Verschmutzungen angereicherte Fasersuspension mit 7 bezeichnet.

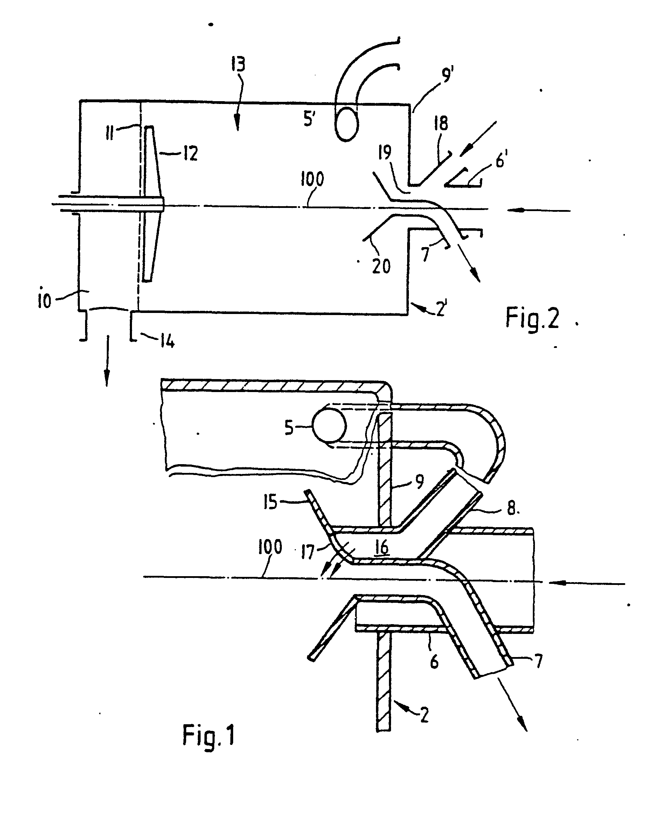

Im Falle von Fig. 1 wird die mit Schwerschmutz angereicherte Fraktion über Stutzen 8 dem Sekundärstofflöser wieder zugeführt. Dabei mündet der Stutzen 8 zunächst in die Hülse 6, setzt sich jedoch in einer eigenen Kammer 16 fort mit einer Austrittsöffnung 17, die in dem Bereich der Eintrittsöffnung des Stutzens 7 mit Öffnung 17 mündet. Diese Öffnung 17 befindet sich in einer kegelförmigen Leitwand 15, die die aus der Hülse 6 in den Sekundärstofflöser eintretende Fasersuspension radial nach außen ablenkt. Dadurch ist es möglich, ohne Störung der Strömungsverhältnisse in dem Sekundärstofflöser die Fasersuspension mit geringen Druckverlusten in denselben einzuführen. Insbesondere wird dadurch die Abscheidung der Störstoffe leichter und schwerer Art über Stutzen 7 nicht behindert.

Mit den nicht bezifferten Pfeilen ist jeweils noch die Strömungsrichtung angegeben. Der Winkel der Neigung der Leitfläche 15 bzw. 20 (Fig. 2) gegenüber der Achse 100 beträgt etwa 30 bis 60° Der Außendurchmesser des Leitbleches 15 beträgt etwa das 1,2- bis 2-fache des Innendurchmessers der Hülse 6. Die Durchmesser der Stutzen 8 und 7 betragen etwa das 0,2- bis 0,6-fache des Eintrittsstutzens 6. Der Durchmesser dieser Hülse 6 wiederum beträgt höchstens das 0,25-fache des Gesamtdurchmessers des Sekundärstofflösers.

In den Figuren ist die Hülse 6 gerade ausgeführt, während Stutzen 7 jeweils als Rohrkrümmer ausgebildet ist. Die Anordnung könnte jedoch auch umgekehrt getroffen sein.

Durch die geschilderte Anordnung ist es insbesondere möglich, neben dem Abzug einer mit Verschmutzungen angereicherten Fraktion auch die Zuführung insbesondere der Schwerschmutzfraktion über Stutzen 8 zu ermöglichen, wobei dann diese Fraktion mit der übrigen mit Leichtschmutz angereicherten Fraktion über Stutzen 7 aus dem Sekundärstofflöser 2 abgezogen wird.

Bei der beschriebenen Anordnung ist insbesondere eine Nachreinigung hinsichtlich der schweren Verunreinigungen in einem gesonderten, dem Sekundärstofflöser nachgeschalteten Gerät nötig. Es wird jedoch in dieser Hinsicht nachfolgend eine einfache Problemlösung aufgezeigt. Mit der erfindungsgemäßen Lösung erhält man bei weiterhin guter Schmutzabscheidung eine wesentliche Erhöhung des gesamten Durchsatzes des Sekundärstofflösers 2. Sie kann bis zu 40 % Verbesserung betragen.

In Fig. 2 ist die Variante dargestellt, bei welcher über Stutzen 18 die mit Leichtschmutz angereicherte, über Öffnung 5' abgezogene Fraktion nach Zwischenreinigung, z. B. mittels Hydrozyklon, wieder in die Hülse 6' hineingegeben wird, wonach sie durch die Mündung 19 desselben mit der neu zugeführten Fasersuspension wieder in den Sekundärstofflöser 2' gelangt. Die Rückführung dieser zwischengereinigten Fraktion ermöglicht in bekannter Weise eine gute Entfernung von Schwerschmutzanteilen aus dem Prozeß.

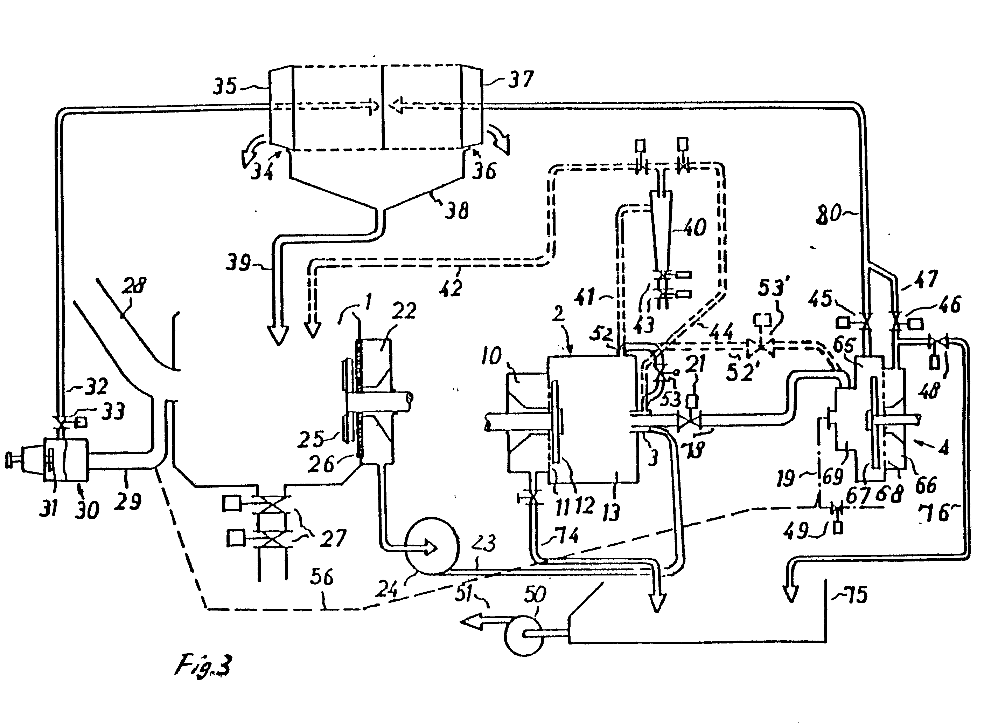

Dem Primärstofflöser 1 ist bei der Anlage nach Fig. 3 der Sekundärstofflöser 2 über Leitung 23 nachgeschaltet, der einen zentralen Auslaßstutzen aufweist, aus welchem eine mit Leichtschmutz angereicherte Fraktion abgezogen wird. Die aus diesem Stutzen abgezogene Fraktion wird über Leitung 78 einem Waschfilter 4 zugeführt. Dieses weist einen zentralen Umwälzraum 65 auf, der von einem Gutstoffraum 66 durch ein Sieb 68 getrennt ist, vor welchem koaxial zu dem Umwälzraum ein Umwälzlaufrad 67 rotiert. Dabei ist dem Umwälzraum 65 ein zu diesem koaxial liegender Eintrittsraum 69 vorgeschaltet, an den die vom Sekundärstofflöser 2 kommende Stoffleitung 78 sowie eine Waschwasserleitung 19 angeschlossen sind. Dabei ist die Leitung 78 tangential und die Leitung 19 stirnseitig zentral in den Eintrittsraum 69 geführt.

Das Gehäuse des Sekundärstofflösers 2 hat eine im wesentlichen rotationssymmetrische Grundform. Auch hierbei ist ein Gutstoffraum 10 von dem Umwälzraum 13 durch ein Sieb 11 abgetrennt, vor dem ein Umwälzlaufrad 12 im Umwälzraum 13 koaxial mit diesem rotierbar gelagert ist. Über das Sieb 11 abgeschiedener Gutstoff wird über Leitung 74 einem Gutstoffsammelbehälter 75 zugeführt.

Gleichfalls wird der Gutstoff aus dem Gutstoffraum 66 des Waschfilters 4 über Leitung 76 diesem Sammelbehälter zugeführt. Ferner führt eine Stoffleitung 80 aus dem Umwälzraum 65 des Waschfilters 4 heraus. Das Umwälzlaufrad 12 erzeugt in dem Umwälzraum 13 des Sekundärstofflösers 2 eine Wirbelströmung, welche dazu führt, daß an seiner Peripherie eine mit Schwerschmutz angereicherte Fraktion und aus seinem zentralen Bereich eine mit Leichtschmutz angereicherte Fraktion über den genannten Leichtstoffabzugsstutzen abgezogen werden kann. Dazu ist in der Leitung 78, die zu dem Waschfilter 4 führt, noch ein automatisch betätigbares Ventil oder Schieber 21 vorgesehen, das periodisch geöffnet werden kann, um die entsprechende Fraktion dem Waschfilter 4 zuzuführen.

In dem Primärstofflöser 1 wird ebenfalls die Gutstofffraktion nach Siebung mittels des Siebes 26 mit Unterstützung des Rotors 25 in dem Gutstoffraum 22 gebildet.

Schwerschmutz wird in üblicher Weise dort durch die Schwerschmutzschleuse 27 abgeführt. Ferner ist an dem Primärstofflöser 1 noch eine Zopfabzugsleitung 28, die zu einer Zopfwinde führt, angeschlossen. An diese Zopfabzugsleitung ist wiederum eine Leitung 29 herangeführt, über die Fasersuspension einem Abzugsapparat 30 zugeführt wird, in dessen Abzugsraum ein Aufschlagrad 31 vorgesehen ist, das zur weiteren Auflösung von Papierfetzen dient. Dazu kann das in der an dem Abzugsapparat 30 angeschlossenen Abzugsleitung 32 eingeschaltete Ventil 33 eine Weile geschlossen bleiben, um in der Zwischenzeit eine Auflösung der Papierfetzen zu bewirken. Die Leitung 32 ist dann zu einer um eine horizontale Achse rotierbaren Sortiertrommel 34 geführt, aus welcher nicht sortierbarer Schmutz stirnseitig über die Öffnung 35 abgezogen wird. Der sortierbare, nicht mehr so stark verschmutzte Gutstoff gelangt durch die Perforation der Sortiertrommel 34 in den Sammelbehälter 38 und wird über Leitung 39 zweckmäßig wieder dem Primärstofflöser 1 zugeführt.

Ebenso kann die aus dem Sekundärstofflöser 2 über Leitung 41 und den dort angeschlossenen Hydrozyklon 40 abgezogene, mit Schwerschmutz angereicherte Suspension wieder über Leitung 42 dem Primärstofflöser 1 zugeführt werden. Es ist allerdings auch möglich, diese Gutstofffraktion des Hydrozyklons 40 über Leitung 44 wieder in den Bereich des Leichtstoffabzugsstutzens 3 des Sekundärstofflösers 2 und in dessen Umwälzraum 13 zurückzuführen. Dies ist aber nur in Ausnahmefällen nötig, wie später ausgeführt wird.

In die aus dem Umwälzraum 5 des Waschfilters 4 führende Stoffleitung 20 ist ebenfalls ein automatisch zu betätigendes Ventil 45 eingeschaltet. Ferner weist die aus dem Gutstoffraum 6 des Waschfilters 4 führende Gutstoffleitung eine Verzweigungsleitung 47 auf, in die ebenfalls ein automatisch betätigbares Ventil 46 eingeschaltet ist. Auch die Gutstoffabzugsleitung 76 weist ein automatisch betätigbares Ventil 48 auf. Entsprechendes gilt für die Waschwasserleitung 19, wozu dort das Ventil 49 vorgesehen ist.

Man kann nun nach Öffnung des Ventils 21 die Ventile 45 und 46 geschlossen lassen, um den in dem Waschfilter abgeschiedenen Gutstoff aus dem Gutstoffraum 66 dem Gutstoffsammelbehälter 75 zunächst zuzuführen (Phase I). Erst nachdem sich eine größere Menge Schmutz in dem Umwälzraum 65 des Waschfilters angesammelt hat, wird man Ventil 48 schließen und dafür Ventil 46 und Ventil 49 in der Waschwasserleitung öffnen. (Man kann natürlich auch Ventil 49 etwas eher öffnen und so noch eine gewisse Zeit verwertbare Fasersuspension, die noch nicht so stark verdünnt ist, der Gutstoffsammelbütte 75 zuführen - Phase IIa.) Dadurch wird eine weitere Durchspülung und Auflockerung der in dem Umwälzraum 65 befindlichen Fasersuspension erreicht, wodurch eine weitere Sortierung derselben über das Sieb 68 möglich wird (Phase II bzw. IIb). Man führt dann in dieser Zeitspanne erzeugten Gutstoff über Leitung 80 in die um eine horizontale Achse rotierbare Sortiertrommel 36 mit perforiertem Mantel. Dort wird ebenfalls wie bezüglich des Teils 34 der nicht sortierbare Anteil über die stirnseitige Öffnung 37 ausgeschieden, während der sortierbare Gutstoff, der relativ wenig verschmutzt ist, durch die Perforation gelangt und in den Sammelbehälter 38 abgeführt wird. In dem Ausführungsbeispiel sind die beiden Trommelteile 34 und 36 zu einer Einheit zusammengefaßt und durch eine Trennwand voneinander getrennt. Die Zuführung der Suspension erfolgt dabei durch die Leitungen 32 und 80 in die Nähe der Trennwand, wie dargestellt.

Sobald über Leitung 19 bei geöffnetem Ventil 49 Waschwasser in das Waschfilter geführt wird, ist am besten das Ventil 21 in Leitung 78 zu schließen. Nachdem Leitung 47 mittels Ventil 46 eine Weile geöffnet war, wird Leitung 46 ebenfalls wieder geschlossen und Leitung 45 geöffnet. Bei geöffnetem Ventil 49 spült dann das Waschwasser mit Hilfe des Umwälzlaufrades 67 den Restanteil, der insbesondere aus Schmutzanteilen besteht und nur noch verhältnismäßig wenig Fasern enthält, aus dem Umwälzraum 65 über Leitung 80 hinaus (Phase III). Eine noch verwertbare Faseranteile enthaltende Fraktion wird dann ebenfalls durch den Trommelteil 36 wiedergewonnen, um in dem Primärstofflöser 1 weiter aufgearbeitet zu werden.

Es ist mit 50 noch eine Pumpe bezeichnet, die den Gutstoff über Leitung 51 aus dem Gutstoffsammelbehälter 75 abführt.

Der mit Schwerschmutz angereicherte Teil, der sich am Umfang des Sekundärstofflösers 2 ansammelt, wird durch eine den Leichtschmutzabzug desselben umgebende Ringhülse 3 in den Eintrittsbereich des letzteren, also in den Wirbelkern zurückgeführt, wodurch der größte Teil des Schwerschmutzes zusammen mit dem Leichtschmutz dem Waschfilter 4 zuströmt. Es ist noch ein Handabsperrventil 53 vorgesehen, um die Schwerschmutzfraktion bei Bedarf direkt in den Waschfilter 4 über mit Schieber 53' versehene Leitung 52' oder über Hydrozyklon 40 zu leiten.

Im allgemeinen ist dies aber nicht nötig und auch der Schwerschmutz wird wegen der nur kurzen Schließzeit des Schiebers 21 problemlos aus dem Sekundärstofflöser 2 über Leitungen 52 und 78 abgeführt.

Es ist nun durchaus möglich, den Trommelteil 36 durch einen Eindicker zu ersetzen und den praktisch kaum noch verwertbaren Faseranteil enthaltenden Stoff der Phasen III (und eventuell IIb) nach Eindickung zu verwerfen und das Eindickerwasser als Verdünnungswasser für den Stofflöser zu verwenden.

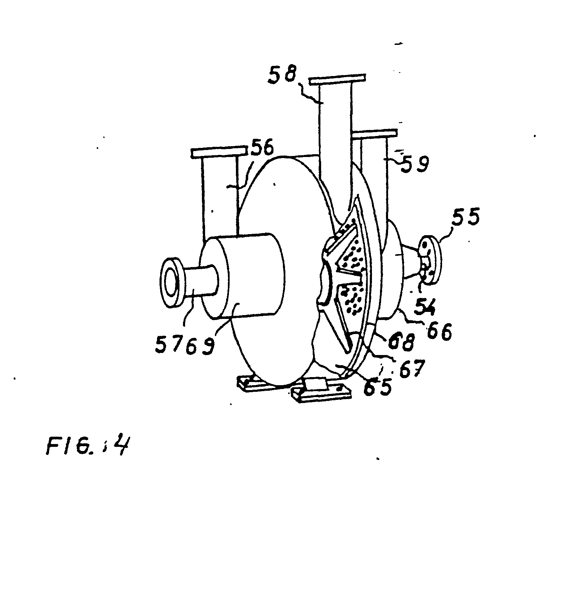

Wie gesagt, weist das Waschfilter 4 einen Umwälzraum 65 und einen diesem vorgeschalteten Eintrittsraum 69 auf. Dabei ist der Durchmesser des Eintrittsraumes 69 wesentlich kleiner als der des Umwälzraumes 65 (etwa 30 - 60 % desselben) und der Umwälzraum ist als ein gedrungener, scheibenförmiger Zylinder ausgeführt (siehe Fig. 4). Bei einer Breite b desselben von ca. 30 cm liegt das Verhältnis von dessen Breite zu seinem Durchmesser D b/D zwischen 0,15 und 0,35. Für einen günstigen Wascheffekt wurde ein Verhältnis zwischen 0,2 und 0,3 als am geeignetsten gefunden. Dadurch ergibt sich eine große Siebfläche 8 bei relativ kleinem Volumen des Umwälzraumes 65. Dieses beträgt etwa nur 20 bis 50 % des Volumens des Umwälzraumes 13 des Sekundärstofflösers 2. Durch die Anordnung des vorgeschalteten Eintrittsraumes sowie den flachen, scheibenförmigen Umwälzraum wird eine gute Durchspülung mit dem Waschwasser einerseits und wegen der möglichen, großen Siebfläche eine große Durchsatzleistung erzielt. Bisherige, bekannte Waschfilter wären wegen der zu behandelnden, mit relativ groben Verschmutzungen durchsetzten Fasersuspension völlig unzureichend für diesen Zweck.

Die Lochdurchmesser des Siebes im Waschfilter 4 wählt man dabei am zweckmäßigsten zwischen 2 und 3 mm, während ja bekanntlich der Sieblochdurchmesser in dem Sekundärstofflöser etwa im allgemeinen zwischen 3 und 5 mm liegt. Die Sieblochdurchmesser in dem Trommelteil 34 liegen am besten zwischen 12 und 18 mm und im Trommelteil 36 zwischen 2 und 4 mm. Der Trommelteil 36 erhält deswegen die sehr viel feinere Lochung, weil ja auch viel feinere Verschmutzungen in der hier behandelten Fasersuspension enthalten sind. Führte man die beiden Trommelteile getrennt aus, so könnte man für jeden eine andere Antriebsdrehzahl vorsehen und jeweils den Trommeldurchmesser dem jeweiligen Bedarf anpassen.

Man kann ferner noch Entstippungsleisten auf dem Sieb 68 auf der Seite vorsehen, die dem Umwälzlaufrad zugewandt ist.

In Fig. 4 erkennt man, daß zweckmäßig die Leitungen, insbesondere die Eintrittsstutzen 56 und Austrittsstutzen 58 des Umwälzraumes, aber auch Austrittsstutzen 59 des Gutstoffraumes tangential angeordnet sind. Waschwasser-Anschlußstutzen 57 ist hingegen zentral am Eintrittsraum 69 vorgesehen. Der Antrieb des Rotors erfolgt durch Welle 54 über Kupplungsflansch 55.

Man hat bei der Erfindung den Hauptvorteil, daß man hinter dem Waschfilter Spuckstoff erhält (Phase III und eventuell IIb) der nur noch einen geringen Faseranteil enthält. Phasen II und III sind nämlich sehr kurz im Verhältnis zu Phase I (es gilt etwa des Verhaltnis 1 : 10 bis 1 : 15), so daß der Stoff im Umwälzraum 65 des Waschfilters durch den Rotor und das Sieb sehr weitgehend entstippt wird. Deshalb kann man den Spuckstoff der genannten Phasen - wie oben beschrieben - einfach entwässern und dann verwerfen.

Man hat bei der erfindungsgemäßen Anordnung weiter den großen Vorteil, daß man sowohl hinter dem Sekundärstofflöser als auch hinter dem Waschfilter einen Gutstoff mit einer Konsistenz von etwa 4 % erhält, so daß eine Eindickung desselben entfällt.

Ein weiterer Vorteil ist, daß man den störanfälligen Vibrationssortierer völlig vermeiden kann.

Mit der in Fig. 3 als gestrichelte Linie angedeuteten Leitung 56 könnte man auch noch den Abzugsapparat 30 vermeiden, vor allem bei kleineren Anlagen mit geringem Schmutzanfall.

Man könnte den aus dem Sekundärstofflöser 2 über Leitung 78 abgezogenen Stoff zwar auch über einen Vibrationssortierer anstelle des Waschfilters 4 führen, jedoch hätte man dann nicht dessen guten Sortierwirkungsgrad und letztlich größere Faserverluste, neben dem oben genannten Nachteil.

**Patentansprüche**

1. Einrichtung zur Aufbereitung von Altpapier mit einem einen durch ein Sieb von einem Gutstoffraum getrennten Umwälzraum, von dem stirnseitig zentral ein Abzugsstutzen zur Abfuhr einer mit Leichtschmutz angereicherten Fraktion und an dessen Umfang eine zur Abfuhr von mit Schwerschmutz angereicherter Fasersuspension dienende Leitung abgeht und der eine den Abzugsstutzen für die mit Leichtschmutz angereicherte Fraktion umgebende Hülse zur Stoffrückführung aufweist, welche an einem Ende eine stirnseitige Öffnung hat, mit welchem Ende sie in den Umwälzraum des Sekundärstofflösers hineinragt, wobei die Abzugsleitung (52) für die an Schwerschmutz reiche Fraktion des Sekundärstofflösers auf direktem, kurzen Wege in geschlossener Leitungsführung, möglicherweise mit eingeschaltetem Hydrozyklon, in die Hülse (3, 6, 6') eingeleitet wird und die Hülse als Einlaßkanal der Einrichtung sowohl für die neu zugeführte als auch die zurückgeführte Stoffmenge dient.

2. Einrichtung nach Anspruch 1, dadurch gekennzeichnet, daß die Abzugsleitung (52) für die an Schwerschmutz reiche Fraktion des Sekundärstofflösers (2) an den radialen Mantel der Hülse (3, 6') angeschlossen ist.

3. Einrichtung nach Anspruch 1, dadurch gekennzeichnet, daß die von der am Gehäuseumfang vorgesehenen Abzugsöffnung (5) für die mit Schwerschmutz angereicherte Fraktion zur Einlaufhülse (6) rückgeführte Stoffleitung (8) innerhalb der Hülse (6) zwischen deren Umfangswandung und der zentralen Stoffabzugsleitung (7) in das Gehäuseinnere des Sekundärstofflösers (2) hineingeführt ist.

4. Einrichtung nach Anspruch 3, dadurch gekennzeichnet, daß die zentrale Stoffabzugsleitung (7) sich an ihrer Eintrittsöffnung zu einem Eintrittrichter (15) erweitert und daß die Rückführleitung (8) für den Schwerschmutz innerhalb der Einlaufhülse (6) als ein Kanal (16) geführt ist, der in das Innere des Sekundärstofflösers (2) durch eine Öffnung (17) in den Einlauftrichter (15) mündet.

5. Einrichtung nach einem der Ansprüche 1 bis 4, dadurch gekennzeichnet, daß die zentrale Abzugsleitung (7, 7', 78) des Sekundärstofflösers (2, 2') an ein Waschfilter (4) angeschlossen ist, das einen zumindest angenähert runden Umwälzraum (55) und einen durch ein im wesentlichen ebenes Sieb (58) vor dem ein Umwälzlaufrad (57) im Umwälzraum (55) angebracht ist, vom Umwälzraum (55) getrennten Gutstoffraum (56) sowie einen Eintrittsraum (59) für Fasersuspension und Waschwasser aufweist, der einen mindestens um ein Drittel kleineren Durchmesser als der Umwälzraum (55) hat, der einen Waschwasseranschluß (79) aufweist und bei dem vom Umwälzraum (55) eine Spuckstoffabzugsleitung (80) abgeht.

**Claims**

1. Device for the preparation of waste paper with a circulating chamber separated from an accepts chamber by a screen plate, from which circulating chamber a discharge branch goes off centrally at the end face for removal of a fraction containing lightweight contaminants, and at whose periphery a pipe goes off for removal of fibre suspension containing heavy contaminants, and which has a sleeve for stock recovery surrounding the discharge branch for the fraction containing lightweight contaminants, this sleeve having an opening at one face end with which end it projects into the circulating chamber of the secondary pulper, with the discharge pipe (52) running, for the fraction of the secondary pulper containing heavy contaminants over a direct, short path as closed pipe run, possibly with switched-on hydrocyclone, into the sleeve (3, 6, 6') and the sleeve serving as inlet channel of the device both for the newly supplied and for the returned stock flow.

2. Device according to claim 1 characterized in that the discharge pipe (52) for the fraction of the secondary pulper (2) rich in heavy contaminants is connected to the radial shell of the sleeve (3, 6').

3. Device according to claim 1 characterized in that the stock pipe (8) led back from the discharge opening (5) provided at the housing periphery for the fraction containing heavy contaminants to the inlet sleeve (6) within the sleeve (6) between its peripheral wall and the central stock discharge pipe (7) is introduced into the housing interior of the secondary pulper (2).

4. Device according to claim 3 characterized in that the central stock discharge pipe (7) is expanded at its inlet opening into an inlet funnel (15) and that the return pipe (8) for the heavy contaminants is led inside the inlet sleeve (6) as a channel (16), which terminates in the interior of the secondary pulper (2) by an opening (17) in the inlet funnel (15).

5. Device according to one of claims 1 to 4 characterized in that the central discharge pipe (7, 7', 78) of the secondary pulper (2, 2') is connected to a washing filter (4) which has an at least approximately circular circulating chamber (65) and an accepts chamber separated from the circulating chamber (65) by a mainly flat screen (68) ahead of which is arranged a circulating impeller (67) in the circulating chamber (65) as well as an inlet chamber (69) for fibre suspension and washing water, which has a circulating chamber (65) at least one third smaller in diameter, which exhibits a washing water connection (79) and at which a rejects discharge pipe (80) leads off from the circulating chamber (65).

**Revendications**

1. Equipement pour le traitement des vieux papiers avec une chambre de circulation séparée d'une chambre pour pâte à papier finie par un tamis. La face frontale de la chambre de circulation présente une conduite centrale d'évacuation par laquelle est évacuée une fraction enrichie de contaminants légers. Sur sa périphérie part une conduite servant à évacuer la suspension de fibres enrichie de contaminants lourds. La chambre de circulation présente une douille pour le retour de pâte, entourant la conduite d'évacuation pour la fraction enrichie de contaminants légers, cette douille présentant une ouverture frontale à l'une des extrémités, cette extrémité pénétrant dans la chambre de circulation du pulper secondaire, la conduite d'évacuation (52) pour la fraction enrichie en contaminants lourds du pulper secondaire débouchant directement et au plus court, sous forme de conduite fermée, éventuellement avec hydrocyclone en service, dans la douille (3, 6, 6'), la douille servant de canal d'entrée de l'équipement tant pour la pâte nouvellement apportée que pour la pâte de retour.

2. Equipement conformément à la revendication 1, caractérisé par le fait que la conduite d'évacuation (52) pour la fraction riche en contaminants lourds du pulper secondaire (2) est raccordée à l'enveloppe radiale de la douille (3, 6').

3. Equipement conformément à la revendication 1, caractérisé par le fait que la conduite de pâte (8) ramenée à la douille d'entrée (6) à partir de l'ouverture d'évacuation (5) prévue sur le pourtour du carter pour la fraction enrichie en contaminants lourds, est introduite à l'intérieur du carter du pulper secondaire (2) au sein de la douille (6), entre sa paroi périphérique et la conduite centrale d'évacuation de pâte.

4. Equipement conformément à la revendication 3, caractérisé par le fait que la conduite centrale d'évacuation de pâte (7) s'élargit au niveau de son ouverture d'entrée sous forme de trémie d'entrée (15) et que la conduite de retour (8) pour les contaminants lourds est conduite au sein de la douille d'entrée (6) sous forme de canal (16) qui débouche à l'intérieur du pulper secondaire (2) par un orifice (17) dans la trémie d'entrée.

5. Equipement conformément aux revendications 1 à 4, caractérisé par le fait que la conduite centrale d'évacuation (7, 7', 78) du pulper secondaire (2, 2') est raccordée à un filtre de lavage (4) qui présente une chambre de circulation (65) au moins pratiquement circulaire et une chambre pour pâte à papier finie (66) séparée de la chambre de circulation (65) par un tamis (68) essentiellement plan, devant lequel une turbine de circulation (67), est logée dans la chambre de circulation (65) ainsi qu'une chambre d'entrée (69) pour la suspension fibreuse et l'eau de lavage, laquelle a un diamètre inférieur d'au moins 1/3 à celui de la chambre de circulation (65), laquelle présente un raccord pour eau de lavage (79) et de laquelle part une conduite d'évacuation des refus (80) de la chambre de circulation (65)

Fig.2

Fig.1

Fig.3

FIG. 14